# EUROPEAN PATENT APPLICATION

(11) **EP 4 418 370 A1**
(43) Date of publication of application: **21.08.2024**
(21) Application number: 22880960.4
(22) Date of filing: 07.10.2022
(51) Int. Cl.: H01M 4/86, B01J 23/652, B01J 37/08, H01M 4/88, H01M 4/92

(54) **ELECTRODE CATALYST FOR HYDROGEN FUEL CELL ANODE**

(30) Priority: 15.10.2021 JP 2021169844
(71) Applicant: CATALER CORPORATION, Kakegawa-shi, Shizuoka 437-1492 (JP)
(72) Inventor: TAKANO, Aoi, Kakegawa-shi, Shizuoka 437-1492 (JP); HORIUCHI, Yosuke, Kakegawa-shi, Shizuoka 437-1492 (JP)
(74) Representative: Wallinger Ricker Schlotter Tostmann
(86) International application number: PCT/JP2022/037682
(87) International publication number: WO 2023/063265

(57) **Abstract**

An electrode catalyst which is for a hydrogen fuel cell anode and in which Pt particles and WO₃ particles are carried on carbon carriers, wherein the WO₃ particles have a monocline system crystalline structure.

## Description

### FIELD

The present invention relates to an electrode catalyst for hydrogen fuel cells. The electrode catalyst of the present invention is an electrode catalyst for use in anodes of hydrogen fuel cells for generating electricity using hydrogen as fuel.

### BACKGROUND

Research and development of fuel cells have been advancing in order to prevent air pollution, suppress greenhouse gas emissions, and meet the demand for an alternative to fossil fuels. Fuel cells have advantages of being clean, having high energy density, and requiring no charging. Fuel cells are expected to be a next-generation energy source.

A fuel cell, for example, has a structure in which an anode and a cathode are arranged in opposite via an ion-exchange membrane. When a fuel (for example, hydrogen) is supplied to the anode side and an oxidizer (for example, air) is supplied to the cathode side, a predetermined electrochemical reaction occurs on each electrode and electricity is generated.

A hydrogen fuel cell using hydrogen as fuel, for example, in the case of a solid ion-exchange membrane fuel cell, generates electricity by the following electrochemical reactions (1) and (2) occurring at the anode (hydrogen electrode) and the cathode (air electrode), respectively.

Hydrogen electrode: 2H₂ → 4H⁺ + 4e⁻ (1)

Air electrode: O₂ + 4H⁺ + 4e⁻ → 2H₂O (2)

However, hydrogen peroxide may be generated by a side reaction. When the generated hydrogen peroxide comes into contact with an impurity (for example, iron ions Fe²⁺), hydroxyl radicals (·OH), which have very high oxidizing power, are generated, attacking and degrading the electrolyte membrane and electrode materials to impair durability of the fuel cell.

PTL 1 proposes that an oxide catalyst selected from, for example, MnO₂, RuO₂, ZnO, WO₃, MnO₂-Al₂O₃, RuO₂-Al₂O₃, ZnO-Al₂O₃, and WO₃-Al₂O₃ is added to an electrolyte membrane or an oxidizer electrode (air electrode) of a fuel cell, and describes that generation of hydrogen peroxide is suppressed thereby.

### [CITATION LIST]

### [PATENT LITERATURE]

[PTL 1] Japanese Unexamined Patent Publication (Kokai) No. 2000-106203

### SUMMARY

### [TECHNICAL PROBLEM]

The technique of PTL 1 focuses on a two-electron reaction shown in the following electrochemical reaction (3) occurring as a generation mechanism of hydrogen peroxide, in addition to the four-electron reaction shown in the above electrochemical reaction (2), in the cathode (air electrode).

Air electrode: O₂ + 2H⁺ + 2e⁻ → H₂O₂ (3)

However, a portion of oxygen supplied to the cathode may pass through the electrolyte membrane (solid ion-exchange membrane) to reach the anode. The oxygen that reaches the anode reacts with hydrogen atoms (H_{ad}) adsorbed on the anode (particularly, Pt particles, which are a catalytically active species) to generate hydrogen peroxide by the following electrochemical reaction (4).

Hydrogen electrode: 2H_{ad} + Q₂ → H₂O₂ (4)

It is considered that in the air electrode, the contribution of the four-electron reaction shown in the electrochemical reaction (2) proceeds preferentially, and the contribution rate of the two-electron reaction shown in the electrochemical reaction (3) is low. In contrast, the oxygen that passes through the electrolyte membrane (solid ion-exchange membrane) to reach the hydrogen electrode generates hydrogen peroxide by the electrochemical reaction (4) with high probability. Therefore, the electrochemical reaction (4) in the hydrogen electrode is considered to greatly contribute to the generation of hydrogen peroxide in a hydrogen fuel cell.

The present invention has been completed based on the above considerations. An object thereof is to provide an electrode catalyst for hydrogen fuel cells that can suppress generation of hydrogen peroxide in hydrogen fuel cells for generating electricity using hydrogen as fuel and contribute to improvement of long-term durability of the fuel cells.

### [SOLUTION TO PROBLEM]

The present invention is as follows.
«Aspect 1» An electrode catalyst for hydrogen fuel cell anodes, having Pt particles and WO₃ particles supported on a carbon carrier, wherein
   the WO₃ particles comprise a crystal structure of a monoclinic system.
«Aspect 2» The electrode catalyst according to Aspect 1, wherein a ratio (WO₃/Pt) of a molar amount of WO₃ relative to a molar amount of Pt in the electrode catalyst is 0.05 or greater and 5.0 or less.
«Aspect 3» The electrode catalyst according to Aspect 2, wherein the ratio (WO₃/Pt) of a molar amount of WO₃ relative to a molar amount of Pt in the electrode catalyst is 0.1 or greater and 3.0 or less.
«Aspect 4» The electrode catalyst according to any one of Aspects 1 to 3, wherein an average particle size of the WO₃ particles is 0.1 nm or more and 5.0 nm or less.
«Aspect 5» The electrode catalyst according to any one of Aspects 1 to 4, wherein an average particle size of the Pt particles is 2.0 nm or more and 10.0 nm or less.
«Aspect 6» A method for manufacturing the electrode catalyst for hydrogen fuel cell anodes according to any one of Aspects 1 to 5, comprising
   supporting Pt particles on a carbon carrier to obtain a Pt-supporting carbon carrier,
   supporting a WO₃ precursor on the Pt-supporting carbon carrier to obtain an unbaked catalyst, and
   baking the unbaked catalyst at a temperature of higher than 400°C and 650 °C or lower in an inert atmosphere to convert the WO₃ precursor to WO₃ particles comprising a crystal structure of a monoclinic system to obtain a baked catalyst.
«Aspect 7» The method according to Aspect 6, wherein a baking temperature of the unbaked catalyst is 450 °C or higher and 600 °C or lower.
«Aspect 8» The method according to Aspect 6 or 7, further comprising bringing the baked catalyst into contact with an acid to undergo an acid treatment.

### [ADVANTAGEOUS EFFECTS OF INVENTION]

According to the present invention, an electrode catalyst for hydrogen fuel cell anodes that can suppress generation of hydrogen peroxide in hydrogen fuel cells for generating electricity using hydrogen as fuel and contribute to improvement of long-term durability of the fuel cells is provided.

### BRIEF DESCRIPTION OF DRAWINGS

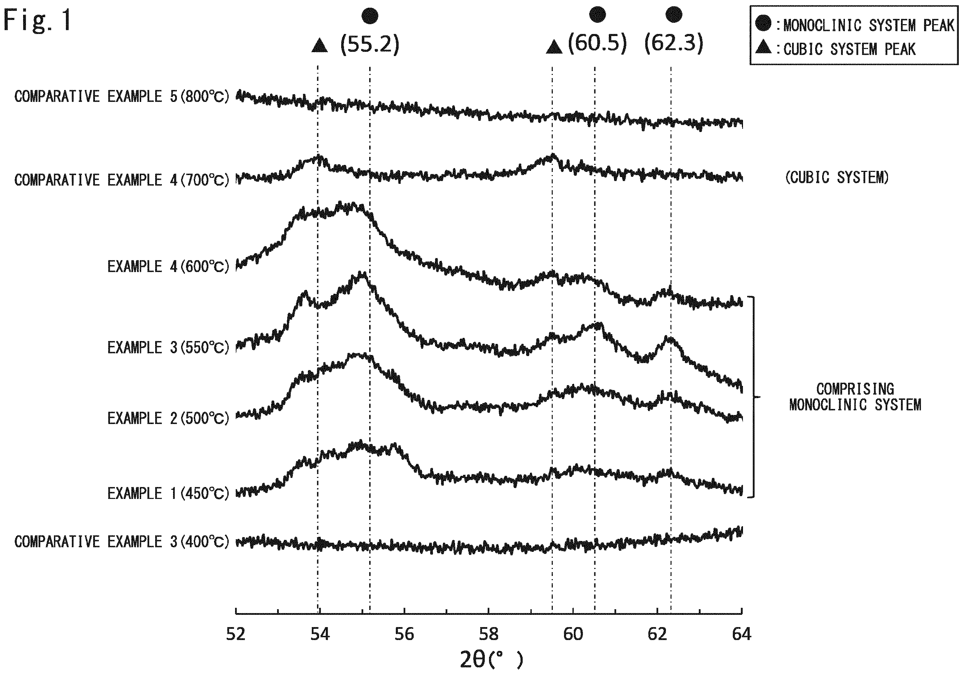

FIG. 1 illustrates XRD spectra (in the range of 2Θ = 52 to 64°, after extracting differences thereof from an XRD spectrum in Comparative Example 1) obtained for samples of Examples 1 to 4 and Comparative Examples 3 to 5.

### DESCRIPTION OF EMBODIMENTS

### «Electrode catalyst for hydrogen fuel cell anodes»

The electrode catalyst for hydrogen fuel cell anodes of the present invention is
an electrode catalyst for hydrogen fuel cell anodes, having Pt particles and WO₃ particles supported on a carbon carrier, wherein
the WO₃ particles comprise a crystal structure of a monoclinic system.

The present inventors have discovered that by having a configuration in which WO₃ particles comprising a crystal structure of a monoclinic system are arranged in the vicinity of Pt particles, which are active species, in a highly active electrode catalyst for hydrogen fuel cells having Pt particles supported on a carbon carrier and using the electrode catalyst having such a configuration in an anode, the generated amount of hydrogen peroxide is decreased, and have completed the present invention.

The mechanism by which the generated amount of hydrogen peroxide is decreased by the electrode catalyst for hydrogen fuel cells of the present invention is unclear. However, the present inventors have presumed as follows.

As described above, it is considered that hydrogen atoms (H_{ad}) adsorbed on an anode (particularly, Pt particles) of a hydrogen fuel cell are involved in the generation of hydrogen peroxide in the anode. Therefore, it is considered that generation of hydrogen peroxide from the anode can be suppressed if the adsorbed amount of hydrogen atoms on Pt particles in the anode is decreased.

WO₃ particles have the property of storing hydrogen atoms by the following electrochemical reaction (5) near the electric potential where catalytic action of the electrode catalyst in the anode is exhibited.

WO₃ + xH⁺ + xe⁻ → HₓWO₃ (5)

The hydrogen storage capacity of WO₃ is particularly remarkably demonstrated in WO₃ comprising a crystal structure of a monoclinic system. Therefore, by arranging WO₃ particles comprising a crystal structure of a monoclinic system, having such a high hydrogen storage capacity, in the vicinity of Pt particles, the adsorbed amount of hydrogen atoms on the Pt particles is decreased, and as a result, it is presumed that the generated amount of hydrogen peroxide is decreased.

### <Carbon carrier>

The carbon carrier in the fuel cell electrode catalyst of the present invention, for example, may be carbon black, graphite, carbon fiber, activated carbon, amorphous carbon, or a nanocarbon material. The graphite may be a natural graphite or an artificial graphite. The natural graphite encompasses lump graphite, earthy graphite, and squamous graphite. The artificial graphite encompasses graphitized carbon, obtained by graphitizing any carbon material. The nanocarbon material encompasses carbon nanotube, graphene, and fullerenes.

In the carbon carrier of the present invention, the specific surface area measured by the BET method using nitrogen as an adsorbent may be 10 m²/g or more, 30 m²/g or more, 50 m²/g or more, 100 m²/g or more, 150 m²/g or more, or 200 m²/g or more, and may be 1000 m²/g or less, 800 m²/g or less, 600 m²/g or less, 500 m²/g or less, or 400 m²/g or less.

The grain size of the carbon carrier as a number average of primary grain sizes measured by electron microscope observation may be 10 nm or more, 20 nm or more, 50 nm or more, 100 nm or more, or 300 nm or more, and may be 800 nm or less, 600 nm or less, 500 nm or less, or 400 nm or less.

The grain size of the carbon carrier can be calculated as a number average of equivalent diameters, based on photographed electron microscope images of the fuel cell electrode catalyst. An "equivalent diameter" refers to a diameter of a perfect circle having a circumference equal to the circumference of a figure to be measured.

### <Pt particle>

In the electrode catalyst for hydrogen fuel cells of the present invention, Pt particles and WO₃ particles described below are supported on a carbon carrier.

The average grain size of the Pt particles may be 20.0 nm or less, 15.0 nm or less, 10.0 nm or less, 8.0 nm or less, 5.0 nm or less, or 4.0 nm or less, and may be 0.5 nm or more, 1.0 nm or more, 1.5 nm or more, or 2.0 nm or more. Pt particles having an average grain size of 5.0 nm or less have the advantage of high ECSA (electrochemically active surface area). Pt particles having an average grain size of 0.5 nm or more have the advantage of excellent maintainability of ECSA when a hydrogen fuel cell is operated for a long period of time. These advantages are particularly advantageously exhibited when the electrode catalyst for hydrogen fuel cells of the present invention is used as an anode (hydrogen electrode).

A person skilled in the art uses terms such as "electrochemically active surface area" and "effective Pt reaction area" as technical terms corresponding to the above ECSA.

The average grain size of the Pt particles, typically, for example, may be 2.0 nm or more and 10.0 nm or less.

The average grain size of the Pt particles in the electrode catalyst for hydrogen fuel cells of the present invention can be calculated by the Scherrer equation from the line width of the diffraction peak in a powder XRD measurement of the electrode catalyst for hydrogen fuel cells. The average grain size of the Pt particles, for example, may be calculated by the Scherrer equation from the line width of the diffraction peak of the (220) plane of Pt in a powder XRD measurement of the electrode catalyst for hydrogen fuel cells.

For the supported amount of Pt particles in the electrode catalyst for hydrogen fuel cells of the present invention, the total mass of the Pt particles, as a ratio to the overall mass of the electrode catalyst for hydrogen fuel cells, may be 5% by mass or greater, 10% by mass or greater, 15% by mass or greater, or 20% by mass or greater, and may be 50% by mass or less, 40% by mass or less, 35% by mass or less, 30% by mass or less, or 25% by mass or less. When the supported amount of Pt particles is 5% by mass or greater, sufficiently high catalytic activity is obtained. When the supported amount of Pt particles is 50% by mass or less, agglomeration of Pt particles can be avoided, and as a result, excellent long-term maintainability of catalytic activity is obtained.

In the electrode catalyst for hydrogen fuel cells of the present invention, a metal other than Pt, in addition to the Pt particles and WO₃ particles described below, may be supported on the carbon carrier. The metal other than Pt, for example, may be one or more metals selected from the group consisting of Ti, Cr, Mn, Fe, Co, Ni, Cu, Ga, Zr, Hf, Ir, Pd, Os, and Rh.

The metal other than Pt may form separate metal particles from the Pt particles and be supported on the carbon carrier, or may form an alloy with the Pt particles and be supported on the carbon carrier as Pt alloy particles.

In the electrode catalyst for hydrogen fuel cells of the present invention, particles of the metal other than Pt selected from above, in addition to the Pt particles and the WO₃ particles described below, may be contained in a mass ratio of the metal other than Pt relative to the total mass of Pt and the metal other than Pt in the range of 5% by mass or less, 3% by mass or less, 1% by mass or less, or 0.5% by mass or less.

Ruthenium (Ru) may be contained in the electrode catalyst for hydrogen fuel cells of the present invention, and in that case, preferably does not form an alloy with the Pt particles. When the Pt particles form an alloy with Ru, there is a concern that catalytic activity and durability may be lowered. The electrode catalyst for hydrogen fuel cells of the present invention may be substantially free of Ru.

For the electrode catalyst for hydrogen fuel cells of the present invention, "substantially free of Ru" means that the mass ratio of Ru relative to the total mass of Pt and Ru is 3% by mass or less, 1% by mass or less, 0.5% by mass or less, 0.3% by mass or less, or 0.1% by mass or less, or Ru is not contained at all.

When Pt in the Pt particles forms Pt alloy particles by alloying with another metal, the average grain size of the Pt alloy particles may be calculated by small-angle X-ray scattering or transmission electron microscope (TEM).

### <WO₃ particles>

The electrode catalyst for hydrogen fuel cells of the present invention comprises WO₃ particles supported on a carbon carrier. The WO₃ particles contained in the electrode catalyst for hydrogen fuel cells of the present invention comprise a crystal structure of a monoclinic system.

Inclusion of WO₃ particles having a crystal structure of a monoclinic system is a concept that encompasses cases where the WO₃ particles include a mixture of monoclinic crystals and one or more selected from crystals of other crystal systems and amorphous forms, in addition to the case where the entirety of the WO₃ particles consist of monoclinic crystals.

The inclusion of WO₃ particles having a crystal structure of a monoclinic system can be confirmed by X-ray diffraction (XRD) measurement of the electrode catalyst for hydrogen fuel cells. The X-ray measurement, for example, may be carried out by the following method.

XRD measurements in the range of, for example, 2Θ = 10 to 90° are carried out for each of an electrode catalyst for hydrogen fuel cells comprising WO₃ particles and a comparative electrode catalyst having the same composition other than not comprising WO₃ particles. In order to exclude peaks originating from components other than WO₃ particles from the XRD spectrum of the electrode catalyst for hydrogen fuel cells comprising WO₃ particles and to smoothen the baseline as much as possible, the difference between the XRD spectrum of the electrode catalyst for hydrogen fuel cells comprising WO₃ particles and the XRD spectrum of the comparative electrode catalyst is then extracted. The differential spectrum extracted as such may be considered as a spectrum originating from only the WO₃ particles in the electrode catalyst for hydrogen fuel cells.

The presence of three peaks (55.2°, 60.5°, and 62.3°) characteristic of monoclinic crystals of WO₃ in the obtained differential spectrum is examined. In the electrode catalyst for hydrogen fuel cells confirmed to have these peaks in the differential spectrum, WO₃ particles contained therein may be evaluated as comprising a crystal structure of a monoclinic system.

Even when the characteristic peaks of monoclinic WO₃ are not clearly observed in the obtained differential spectrum, if a spectrum is present above a straight line formed by connecting the point at 2Θ = 52.0° and the point at 2Θ = 63.0°, WO₃ particles in the electrode catalyst for hydrogen fuel cells may be evaluated as comprising a crystal structure of a monoclinic system.

The average particle size of the WO₃ particles, for example, may be 0.1 nm or more, 0.5 nm or more, 1.0 nm or more, 1.5 nm or more, 2.0 nm or more, 2.5 nm or more, or 3.0 nm or more, from the viewpoint of ensuring that the crystal structure of a monoclinic system in the particles has significant expansion to effectively suppress generation of hydrogen peroxide, and may be 10.0 nm or less, 8.0 nm or less, 6.0 nm or less, 5.0 nm or less, or 4.5 nm or less, from the viewpoint of arranging WO₃ having a crystal structure of a monoclinic system in the vicinity of as many Pt particles as possible to effectively suppress generation of hydrogen peroxide.

The average particle size of the WO₃ particles, typically, for example, may be 0.1 nm or more and 5.0 nm or less.

The average particle size of the WO₃ particles can be calculated by the Scherrer equation from the line width of the single diffraction peak of WO₃ in a powder XRD measurement of the electrode catalyst for hydrogen fuel cells.

The ratio (WO₃/Pt) of the molar amount of WO₃ relative to the molar amount of Pt in the electrode catalyst for hydrogen fuel cells of the present invention may be 0.05 or greater, 0.1 or greater, 0.3 or greater, 0.4 or greater, 0.5 or greater, 0.6 or greater, 0.8 or greater, or 1.0 or greater, from the viewpoint of effectively suppressing generation of hydrogen peroxide. The ratio WO₃/Pt may be 5.0 or less, 4.5 or less, 4.0 or less, 3.5 or less, 3.0 or less, 2.5 or less, or 2.0 or less, from the viewpoint of maintaining catalytic activity.

The ratio (WO₃/Pt) of the molar amount of WO₃ relative to the molar amount of Pt in the electrode catalyst for hydrogen fuel cells of the present invention, typically, may be 0.05 or greater and 5.0 or less, or 0.10 or greater and 3.0 or less.

### <<Method for manufacturing electrode catalyst for hydrogen fuel cell anodes>>

The electrode catalyst for hydrogen fuel cell anodes of the present invention may be manufactured by any method as long as the electrode catalyst has the above configuration. The electrode catalyst for hydrogen fuel cells of the present invention, for example, may be manufactured by the following method.

The method comprises
supporting Pt particles on a carbon carrier to obtain a Pt-supporting carbon carrier (Pt supporting step),
supporting a WO₃ precursor on the Pt-supporting carbon carrier to obtain an unbaked catalyst (WO₃ precursor supporting step), and
baking the unbaked catalyst at a temperature of higher than 400°C and 650°C or lower in an inert atmosphere to convert the WO₃ precursor to WO₃ particles comprising a crystal structure of a monoclinic system to obtain a baked catalyst (baking step).

The method for manufacturing the electrode catalyst for hydrogen fuel cells of the present invention, during the above baking step,
may further comprise bringing the obtained baked catalyst into contact with an acid to undergo an acid treatment (acid treatment step).

Hereinafter, each step of the method for manufacturing the electrode catalyst for hydrogen fuel cells of the present invention will be described sequentially.

### <Pt supporting step>

In the Pt supporting step, Pt particles are supported on a carbon carrier to obtain a Pt-supporting carbon carrier.

Supporting Pt on a carbon carrier may be carried out by, for example, a method in which a Pt precursor and a carbon carrier in a coexisting state are brought into contact with a reducing agent in a suitable solvent, whereby Pt ions in the Pt precursor are reduced to metallic Pt, for deposition on the carbon carrier as Pt particles.

The carbon carrier used herein may be appropriately selected for use according to the carbon carrier in the intended electrode catalyst for hydrogen fuel cells, and a carbon material selected from, for example, carbon black, graphite, carbon fiber, activated carbon, amorphous carbon, and nanocarbon materials may be used as the carbon carrier.

The Pt precursor may be appropriately selected for use from solvent-soluble Pt compounds. The Pt precursor, for example, may be appropriately selected for use from PtCl₂, PtCl₄, PtBr₂, PtS, Pt(CN)₂, and PtCl₂(NH₃)₂ (dinitrodiammineplatinum).

The solvent may be selected for use from those capable of dissolving the Pt precursor used. For example, hydrochloric acid (aqueous solution of hydrogen chloride) may be used when the Pt precursor is PtCl₂, hydrobromic acid (aqueous solution of hydrogen bromide) may be used when the Pt precursor is PtBr₂, a nitric acid aqueous solution may be used when the Pt precursor is PtCl₂(NH₃)₂, and water may be used when the Pt precursor is PtCl₄, PtS, or Pt(CN)₂.

The reducing agent used when reducing Pt ions in the Pt precursor to metallic Pt, for example, may be ethanol, acetic acid, acetaldehyde, sodium borohydride, or hydrazine. The reduction may be carried out at a temperature of 10°C or higher and 100°C or lower for a time of 0.5 h or more and 8 h or less. The reduction temperature is preferably 10°C or higher and 50°C or lower when sodium borohydride is used as the reducing agent, and is preferably 60°C or higher and 100°C or lower when ethanol, acetic acid, acetaldehyde, or hydrazine is used as the reducing agent.

As a result, a Pt-supporting carbon carrier, wherein Pt particles are supported on a carbon carrier, is obtained. The obtained Pt-supporting carbon carrier is recovered from a reaction liquid and washed and dried as needed, and may then be subjected to a subsequent step.

### <WO₃ precursor supporting step>

In the WO₃ precursor supporting step, a WO₃ precursor is supported on the Pt-supporting carbon carrier obtained in the Pt supporting step to obtain an unbaked catalyst. The WO₃ precursor supported on the Pt-supporting carbon carrier in the present step is a precipitate of a tungsten (W) compound and a chemical species that has not reached full oxidization to the state of tungsten oxide (WO₃).

The WO₃ precursor supporting step may be carried out in a suitable solvent.

The tungsten (W) compound for precipitating the WO₃ precursor may be appropriately selected for use from among those that are solvent-soluble. The W compound, for example, may be appropriately selected for use from sodium tungstate, ammonium tungstate, and tungstic acid. The W compound is preferably a W compound that, in a solvent, exists as a stable solution at a certain pH but precipitates when the pH changes. For example, sodium tungstate, which exists as a solution in an alkaline aqueous solution but precipitates in an acidic solution, is a typical example thereof.

The solvent may be selected for use from those capable of dissolving the W compound used. For example, when the W compound is sodium tungstate, water may be used. In order to sufficiently dissolve the W compound in the solvent, a suitable pH adjuster may be added to the solvent to adjust the pH of the solvent. For example, when the W compound is sodium tungstate, ammonia water as a pH adjuster may be added to water as the solvent to adjust the pH of the liquid to be more alkaline.

The WO₃ precursor supporting step may be carried out, for example, by adding a suitable pH adjuster to a reaction mixture consisting of a Pt-supporting carbon carrier in a dispersed state and a solvent comprising a W compound in a dissolved state to adjust the pH of the reaction mixture to a pH for precipitating the W compound. According to this operation, the W compound in a dissolved state is precipitated as a WO₃ precursor and supported on the Pt-supporting carbon carrier. For example, when the W compound is sodium tungstate, a suitable acid (for example, nitric acid or hydrochloric acid) is added to the alkaline reaction mixture in order to adjust the pH of the reaction mixture to be more acidic.

According to the following operation, an unbaked catalyst is obtained.

### <Baking step>

In the baking step, the unbaked catalyst obtained in the WO₃ precursor supporting step is baked at a temperature of higher than 400°C and 650°C or lower in an inert atmosphere to convert the WO₃ precursor supported on the carbon carrier to WO₃ particles comprising a crystal structure of a monoclinic system to obtain a baked catalyst.

In the baking step, the baking atmosphere and the baking temperature are important. Specifically, when the baking temperature is 400°C or lower, conversion from the WO₃ precursor to WO₃ is insufficient, and there is a concern that the hydrogen atom storage capacity of WO₃ may not be sufficiently exhibited. When the baking temperature exceeds 650°C, the crystal form of WO₃ partially or entirely changes to another more stable crystal system (for example, cubic system) to impair the hydrogen atom storage capacity of WO₃ comprising a crystal structure of a monoclinic system. When the baking temperature is further increased, a portion of W in the WO₃ alloys with Pt, and there is a concern that the catalytic activity of the electrode catalyst may be impaired, in addition to the concern that the hydrogen atom storage capacity of the WO₃ particles may be impaired.

The temperature for baking the unbaked catalyst may be 450°C or higher and 600°C or lower.

The baking time of the baking step may be 10 min or more, 20 min or more, 30 min or more, 40 min or more, 1 h or more, 2 h or more, or 4 h or more, from the viewpoint of ensuring conversion from the WO₃ precursor to WO₃. However, even if the baking time is longer than necessary, there is a limit to the improvement of hydrogen atom storage capacity of WO₃. Therefore, the baking time may be 24 h or less, 12 h or less, 6 h or less, 4 h or less, 3 h or less, or 2 h or less.

The surrounding atmosphere during the baking step needs to be an inert atmosphere, preferably an argon atmosphere.

### <Acid treatment step>

The baked catalyst obtained in the baking step may be used as the electrode catalyst for hydrogen fuel cells of the present invention as it is, or may be further subjected to an optional acid treatment step.

In the acid treatment step, the baked catalyst obtained in the baking step is brought into contact with an acid to undergo an acid treatment. Since the acid treatment imparts the carbon carrier with hydrophilicity or improves hydrophilicity of the carbon carrier, an improvement in catalytic activity can be expected.

The acid treatment step may be carried out by immersing the baked catalyst in a solution containing an acid. The solution containing an acid used herein, for example, may be a nitric acid aqueous solution, hydrochloric acid, hydrofluoric acid, or a sulfuric acid aqueous solution.

In the acid treatment step, the temperature of the solution containing an acid, for example, may be 40°C or higher, 50°C or higher, 60°C or higher, 70°C or higher, or 80°C or higher, and for example, may be 100°C or lower, 95°C or lower, 90°C or lower, 85°C or lower, or 80°C or lower. The time of the acid treatment step, for example, may be 1 h or more, 2 h or more, or 4 h or more, and for example, may be 24 h or less, 16 h or less, 12 h or less, 8 h or less, or 6 h or less.

The baked catalyst after the acid treatment may be recovered from the solution containing the acid, washed and dried as needed, and then used as the electrode catalyst for hydrogen fuel cells of the present invention.

### «Application of electrode catalyst for hydrogen fuel cell anodes»

The electrode catalyst for hydrogen fuel cell anodes of the present invention is suitable as an electrode catalyst contained in a catalyst layer included in an anode of a hydrogen fuel cell. In the anode comprising the electrode catalyst for hydrogen fuel cells of the present invention, the generated amount of hydrogen peroxide is suppressed, and therefore the electrode catalyst for hydrogen fuel cells contained in the anode can maintain high activity for a long period of time.

The anode of the hydrogen fuel cell may have a suitable substrate layer and a catalyst layer on the substrate layer, wherein the catalyst layer comprises the electrode catalyst for hydrogen fuel cells of the present invention.

The substrate layer may be appropriately selected for use from those having chemical and mechanical stability that can withstand electrode catalysts and solvents for hydrogen fuel cells and heat and pressure treatments preferably carried out during electrode formation. Specifically, for example, a sheet of polyimide, polyethylene, polypropylene, polysulfone, or polytetrafluoroethylene may be used.

The catalyst layer comprises the electrode catalyst for hydrogen fuel cells of the present invention, but may additionally comprise an ionomer, and may further comprise an optional component, for example, a binder. The ionomer, for example, may be Nafion (sulfonated tetrafluoroethylene-based (co)polymer).

The anode comprising the electrode catalyst for hydrogen fuel cells of the present invention can be suitably applied to an electrode assembly for hydrogen fuel cells, having a structure in which the anode, a solid polymer electrolyte membrane, and a cathode are laminated in this order. The solid polymer electrolyte membrane used herein, for example, may be a known proton-exchange membrane. Any known cathode used in hydrogen fuel cells may be used as the cathode.

The above electrode assembly for hydrogen fuel cells can be suitably applied to a hydrogen fuel cell comprising the fuel cell electrode assembly, a hydrogen channel arranged on the anode side of the fuel cell electrode assembly, and an air channel or oxygen channel arranged on the cathode side. The hydrogen fuel cell may be manufactured by a known method, except that an electrode comprising the electrode catalyst for hydrogen fuel cells of the present invention is used as the anode.

### EXAMPLES

### <<Example 1>>

### (1) Preparation of electrode catalyst

1.13 g of a carbon carrier (carbon black) having a specific surface area of 300 m²/g was dispersed in 80 mL of pure water to obtain a dispersion liquid. A dinitrodiammineplatinum nitric acid solution (corresponding to 0.4 g in terms of Pt metal) as a Pt precursor was added thereto dropwise, and the carbon carrier and the Pt precursor were sufficiently blended into the dispersion liquid. 30 g of ethanol as a reducing agent was then added to the dispersion liquid and kept at 90°C for 2 h to reduce the Pt precursor, whereby Pt particles were supported on the carbon carrier. Solid content was collected by filtration from the obtained dispersion liquid, washed with pure water, and then dried at 80°C for 6 h in air to obtain a Pt-supporting carbon carrier.

The entire amount of the obtained Pt-supporting carbon carrier was dispersed in 80 mL of pure water to obtain a dispersion liquid. Ammonia water was added thereto to adjust the pH to 10. Sodium tungstate dihydrate as a W compound was then added so that a molar ratio of WO₃ to Pt in terms of metal was WO₃/Pt = 1.0, and the mixture was sufficiently stirred until the sodium tungstate dihydrate was dissolved.

A nitric acid aqueous solution having a concentration of 0.1 mol/L was slowly added dropwise by a pipette to the reaction mixture after dissolving the sodium tungstate dihydrate to adjust the pH to 2, whereby the WO₃ precursor was supported on the Pt-supporting carbon carrier.

Solid content in the reaction liquid was collected by filtration, washed with pure water, and dried at 80°C for 6 h in air to obtain an unbaked catalyst.

The obtained unbaked catalyst was baked at 450°C for 1 h in an argon atmosphere to obtain a baked catalyst.

The obtained baked catalyst was immersed in a nitric acid aqueous solution having a concentration of 0.5 N and subjected to an acid treatment at 80°C for 6 h. Subsequently, solid content was collected by filtration, washed with pure water, and then dried at 80°C for 6 h in air to obtain an electrode catalyst of Example 1. The supported amount of Pt particles in the electrode catalyst was 20.0% by mass.

The average particle size of the Pt particles in the obtained electrode catalyst, calculated from the peak intensity shown by Pt elemental metal from the XRD chart measured by the X-ray diffraction method (XRD method) in accordance with JIS K0131, was 3.0 nm. The average particle size of WO₃, calculated from the peak intensity of WO₃ alone in XRD chart by the same method as Pt above, was 4.0 nm.

### (2) Evaluation of electrode catalyst

Ultrapure water and isopropanol were added to the electrode catalyst obtained above, and Nafion (NAFION^{™}, manufactured by DuPont) of the same mass as the electrode catalyst was further added, and the obtained dispersion liquid was subjected to ultrasonic dispersion to obtain an electrode catalyst slurry for application.

The above electrode catalyst slurry was applied dropwise onto the disk electrode portion of the working electrode of a rotating ring-disk electrode apparatus (manufactured by Hokuto Denko Co., Ltd.) using a micropipette and air-dried to obtain an electrode in which the electrode catalyst was uniformly dispersed.

The electrode catalyst was evaluated using the above electrode as a working electrode, a reference hydrogen electrode (RHE) as a reference electrode, and a perchloric acid aqueous solution having a concentration of 0.1 mol/L as an electrolytic solution. The specific operating procedure was as follows.

The electrolytic solution was subjected to oxygen bubbling to dissolve oxygen to a saturation concentration and then used for evaluation.

Operating the rotating ring-disk electrode apparatus, the working electrode was rotated at 1,600 rpm to sir the electrolytic solution under an environment of an electrolytic solution temperature of 30°C, and the electric potential of the disk electrode was swept while a constant electric potential of 1.2 V (vs. RHE) was applied to the ring electrode to determine a hydrogen peroxide generation rate (X_{H2O2}) and an effective platinum reaction area (ECSA). Results are shown in Table 1.

Sweeps for the hydrogen peroxide generation rate (X_{H2O2}) measurements were carried out continuously from 0 V (vs. RHE) to 1.0 V in the positive direction, and then from 1.0 V to 0 V in the negative direction. Scanning rates of the sweeps were set to 10 mV/s in both directions. For calculation of the hydrogen peroxide generation rate, a current value when 0.07 V (vs. RHE) was applied when swept in the negative direction was adopted as the case where the environment of an anode electrode of a fuel cell was reproduced. iR compensation was applied using a measured value of solution resistance of the electrolytic solution.

The value calculated according to the following formula, in accordance with the method described in J. Electrochem. Soc., 134, 495 (2001), was adopted as the hydrogen peroxide generation rate (X_{H2O2}).

Hydrogen peroxide generation rate X_{H2O2} = (2I_{R}/N)/(I_{D} + I_{R}/N)

wherein I_{R} is the ring current value, I_{D} is the disk current value, and N is the collection efficiency.

The collection efficiency N is determined by the following method.

Rotating electrode measurements were carried out in a potassium ferricyanide K₃[Fe(CN)₆] aqueous solution in an argon atmosphere. The value of |I_{R}/I_{D}| in the reduction of [Fe(CN)₆]³⁻ to [Fe(CN)₆]⁴⁻ was determined and defined as the collection efficiency N. "|I_{R}/I_{D}|" represents an absolute value of the number I_{R}/I_{D}.

The hydrogen peroxide generation rate (X_{H2O2}) in Table 1 is shown as a relative value to the value of Comparative Example 1, wherein the electrode catalyst did not comprise a tungsten compound, of 1.00.

Sweeps for electrochemically active specific surface area (ECSA) measurements were carried out continuously from 0 V (vs. RHE) to 1.2 V in the positive direction, and then from 1.2 V to 0 V in the negative direction. Scanning rates of the sweeps were set to 50 mV/s in both directions. The effective platinum reaction area (ECSA) was determined from CV measurement results during the sweeping.

### «Examples 2 to 8 and Comparative Examples 2 to 6»

Except that in "(1) Preparation of electrode catalyst", the use amounts of Pt precursor (dinitrodiammineplatinum nitric acid solution) and W compound (sodium tungstate dihydrate) were each adjusted so that the supported amount of Pt particles was 20.0% by mass and the molar ratio of WO₃/Pt was as described in Table 1 and the baking temperature was changed as described in Table 1, an electrode catalyst was prepared in the same manner as in Example 1 and then evaluated. Results are shown in Table 1.

### <<Comparative Example 1»

Except that in "(1) Preparation of electrode catalyst", the use amount of carbon carrier was set to 1.60 g, a Pt-supporting carbon carrier was obtained in the same manner as in Example 1. The Pt-supporting carbon carrier was collected by filtration from the reaction liquid, washed with pure water, dried at 80°C for 6 h in air, and further baked at 450°C for 1 h in an argon atmosphere to obtain a baked catalyst. The baked catalyst was subjected to an acid treatment, washing with pure water, and drying in the same manner as in Example 1, whereby an electrode catalyst of Comparative Example 1 was prepared, and then evaluated. Results are shown in Table 1.

In "(2) Evaluation of electrode catalyst" for each of the Examples and Comparative Examples, when the electrode catalyst slurry was applied dropwise onto the disk electrode portion of the working electrode of the rotating ring-disk electrode apparatus, dropping amount was adjusted so that the Pt amount on the resulting electrode was constant.

### «XRD measurement of electrode catalyst (confirmation of monoclinic crystals)»

XRD measurements were carried out in the range of 2θ = 10 to 90° for each of the electrode catalysts obtained in the above Examples and Comparative Examples. Peaks originating from components other than the tungsten compound was then excluded from the XRD spectrum of the electrode catalyst comprising the tungsten compound. To smoothen the baseline as much as possible, a difference in XRD spectrum of each of the samples of all Examples and the samples of Comparative Examples 2 to 6 comprising the tungsten compound from the sample of Comparative Example 1 not comprising the tungsten compound was extracted and defined as a spectrum originating from only the tungsten compound in each catalyst.

In the spectrum originating from only the obtained tungsten compound, the presence of three peaks characteristic of monoclinic crystals of WO₃ was examined, and samples confirmed to have these peaks were evaluated as "comprising monoclinic crystals".

The results are also shown in Table 1. The XRD spectra (in the range of 2θ = 52 to 64°, after extracting differences thereof from an XRD spectrum in Comparative Example 1) obtained for the samples of Examples 1 to 4 and Comparative Examples 3 to 5 are shown in FIG. 1 in the order of baking temperature.

[Table 1]

**Table 1.**

| | Electrode catalyst | | | | | | Evaluation results | |
|---|---|---|---|---|---|---|---|---|
| | Pt | | WO₃ | | Baking temperature (°C) | Crystal system contained in WO₃ particles | H₂O₂ generation rate (relative value) | Effective Pt reaction area (m²/g-Pt) |
| | Grain size (nm) | Supported amount (wt%) | Grain size (nm) | WO₃/Pt molar ratio | | | | |
| Example 1 | 3.0 | 20.0 | 4.0 | 1.0 | 450 | monoclinic system | 0.70 | 80.3 |
| Example 2 | 3.0 | 20.0 | 4.0 | 1.0 | 500 | monoclinic system | 0.65 | 79.8 |
| Example 3 | 3.0 | 20.0 | 4.0 | 1.0 | 550 | monoclinic system | 0.64 | 79.9 |
| Example 4 | 3.0 | 20.0 | 4.0 | 1.0 | 600 | monoclinic system | 0.74 | 78.5 |
| Example 5 | 3.0 | 20.0 | 4.0 | 0.2 | 500 | monoclinic system | 0.82 | 80.4 |
| Example 6 | 3.0 | 20.0 | 4.0 | 0.5 | 500 | monoclinic system | 0.76 | 81.2 |
| Example 7 | 3.0 | 20.0 | 4.0 | 3.0 | 500 | monoclinic system | 0.63 | 77.3 |
| Example 8 | 3.0 | 20.0 | 4.0 | 5.0 | 500 | monoclinic system | 0.58 | 40.2 |
| Comparative Example 1 | 3.0 | 20.0 | - | not added | 500 | - | 1.00 (reference) | 80.3 |
| Comparative Example 2 | 2.5 | 20.0 | - | 1.0 | 300 | - | 1.00 | 80.2 |
| Comparative Example 3 | 3.0 | 20.0 | - | 1.0 | 400 | - | 0.94 | 80.5 |
| Comparative Example 4 | 3.0 | 20.0 | 4.0 | 1.0 | 700 | cubic system | 0.90 | 77.9 |
| Comparative Example 5 | 3.5 | 20.0 | - | 1.0 | 800 | - | 0.99 | 68.4 |
| Comparative Example 6 | 3.0 | 20.0 | - | 0.01 | 500 | - | 0.99 | 80.1 |

From the results in Table 1, it was confirmed that H₂O₂ generation rate was remarkably decreased in each of the electrode catalysts of Examples 1 to 8, which were configured by supporting Pt particles and monoclinic WO₃ on a carbon carrier, compared to the electrode catalyst of Comparative Example 1, which did not comprise a tungsten compound. Particularly, it was verified that the maintenance rate of effective Pt reaction area was also large in addition to the remarkable decrease in H₂O₂ generation rate in each of the electrode catalysts of Examples 1 to 7, wherein the molar ratio WO₃/Pt of WO₃ to Pt particles was 0.05 or greater and 4.0 or less, compared to the electrode catalyst of Comparative Example 1.

The grain size of WO₃ in the electrode catalysts obtained in Comparative Examples 2, 3, 5, and 6 are not listed in Table 1 because no WO₃ peaks were observed in the XRD chart. The reasons that no WO₃ peaks were observed in the XRD chart for these Comparative Examples are presumably due to the following.

In Comparative Examples 2 and 3, it is considered that since the baking temperature was low, the conversion from the WO₃ precursor to WO₃ was insufficient, and no measurable particulate WO₃ was effectively generated. In Comparative Example 5, it is considered that since the baking temperature was too high, at least a portion of W atoms in the tungsten compound alloyed with Pt. In Comparative Example 6, it is considered that the supported amount of WO₃ was insufficient and thus no measurable particulate WO₃ was effectively generated.

## Claims

1. An electrode catalyst for hydrogen fuel cell anodes, having Pt particles and WO₃ particles supported on a carbon carrier, wherein
the WO₃ particles comprise a crystal structure of a monoclinic system.

2. The electrode catalyst according to claim 1, wherein a ratio (WO₃/Pt) of a molar amount of WO₃ relative to a molar amount of Pt in the electrode catalyst is 0.05 or greater and 5.0 or less.

3. The electrode catalyst according to claim 2, wherein a ratio (WO₃/Pt) of a molar amount of WO₃ relative to a molar amount of Pt in the electrode catalyst is 0.1 or greater and 3.0 or less.

4. The electrode catalyst according to any one of claims 1 to 3, wherein an average particle size of the WO₃ particles is 0.1 nm or more and 5.0 nm or less.

5. The electrode catalyst according to any one of claims 1 to 4, wherein an average particle size of the Pt particles is 2.0 nm or more and 10.0 nm or less.

6. A method for manufacturing the electrode catalyst for hydrogen fuel cell anodes according to any one of claims 1 to 5, comprising
supporting Pt particles on a carbon carrier to obtain a Pt-supporting carbon carrier,
supporting a WO₃ precursor on the Pt-supporting carbon carrier to obtain an unbaked catalyst, and
baking the unbaked catalyst at a temperature of higher than 400°C and 650°C or lower in an inert atmosphere to convert the WO₃ precursor to WO₃ particles comprising a crystal structure of a monoclinic system to obtain a baked catalyst.

7. The method according to claim 6, wherein a baking temperature of the unbaked catalyst is 450°C or higher and 600°C or lower.

8. The method according to claim 6 or 7, further comprising bringing the baked catalyst into contact with an acid to undergo an acid treatment.
